# EUROPÄISCHE PATENTSCHRIFT

(11) **EP 0 577 937 B1**
(45) Veröffentlichungstag und Bekanntmachung des Hinweises auf die Patenterteilung: **06.12.1995**
(21) Anmeldenummer: 93106605.4
(22) Anmeldetag: 23.04.1993
(51) Int. Cl.: E04H 6/24, B65G 1/04

(54) **Vorrichtung zum Verteilen und Lagern von Gütern**
Device for distributing and storing of goods
Dispositif pour distribuer et entreposer des biens

(30) Priorität: 29.06.1992 DE 4221342
(43) Veröffentlichungstag der Anmeldung: 12.01.1994
(73) Patentinhaber: Noell GmbH, 97080 Würzburg (DE)
(72) Erfinder: Grünanger, Gerhart, Dr., W-8751 Heimbuchenthal (DE); Miller, Michael, W-8700 Würzburg (DE); Weis, Otto, W-8702 Oberpleichfeld (DE)
(74) Vertreter: Lüdtke, Frank

(56) Entgegenhaltungen:
- DE-U- 9 200 409
- FR-A- 1 331 341
- FR-A- 1 396 499
- US-A- 1 605 220
- US-A- 2 845 189
- US-A- 3 337 070
- US-A- 3 662 905

## Beschreibung

Die Erfindung bezieht sich auf eine Vorrichtung zum Verteilen und Lagern von Gütern, wie Fahrzeuge, Container oder dergleichen, insbesondere von Kraftfahrzeugen, gemäß dem Oberbegriff des Anspruchs 1.

Vorrichtungen dieser Art sind in verschiedenen Ausführungen bekannt; sie sind jedoch mit gewissen Mängeln behaftet.

FR-A-1331341 offenbart eine Vorrichtung der genannten Art.

Es ist ferner eine Vorrichtung bekannt (DE-A-16 84 789), die als Aufzug zwei im Abstand übereinander vorgesehene Führungen für die Horizontalverschiebung von Paletten aufweist und die links und rechts der Paletten Antriebsmittel aus Kettenrädern, Zahnrädern und Zahnstangen beherbergt, mit deren Hilfe eine beladene Palette vom Aufzug zum Abstellraum und eine unbeladene Palette vom Abstellraum zum Aufzug oder umgekehrt versetzbar sind.

Die bekannte Vorrichtung ist insgesamt recht aufwendig und störanfällig.

Aufgabe der vorliegenden Erfindung ist es, eine Vorrichtung zum Verteilen und Lagern von Gütern zu schaffen, die sich durch eine größere Wirtschaftlichkeit auszeichnet.

Zur Lösung der Aufgabe wird von der bekannten Vorrichtung zum Verteilen und Lagern von Gütern ausgegangen, die die Merkmale des kennzeichnenden Teils des Anspruchs 1 aufweist.

Vorteilhafte Weiterbildungen der Erfindung ergeben sich aus den Unteransprüchen.

Die Erfindung erbringt eine Vorrichtung zum Verteilen und Lagern von Gütern, die mit wenigen Mitteln auskommt, übersichtlich gestaltet ist und funktionssicher arbeitet.

Im Folgenden wird anhand der Zeichnung ein Ausführungsbeispiel der Erfindung beschrieben:

Es zeigen
- Fig 1: die Vorderansicht einer Vorrichtung zum Verteilen und Lagern von Kraftfahrzeugen, mit einer schwenkbaren Arretierung einer Verschiebeeinrichtung in der Stellung zum Verschieben einer Leerpalette,
- Fig. 2: die Vorrichtung gemäß Fig. 1, mit der Stellung der schwenkbaren Arretierung zum Verschieben einer beladenen Palette,
- Fig. 3: die Vorrichtung gemäß Fig. 1, mit einer ganz nach unten geschwenkten Arretierung,

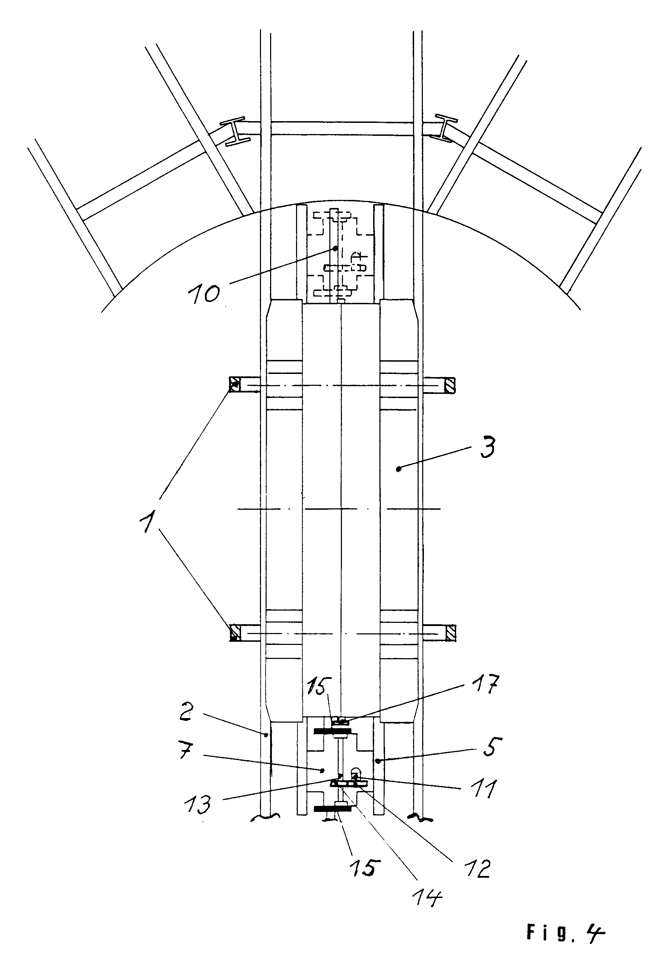

- Fig. 4: eine Teildraufsicht auf die Vorrichtung gemäß Fig. 1, im Einsatz in einem kreisförmigen Parkhaus,
- Fig. 5: eine Teilseitenansicht der Vorrichtung gemäß Fig. 1 - 3, die drehbar in einem Senkrechtförderer gelagert ist, im Einsatz in einem kreisförmigen Parkhaus,
- Fig. 6: einen vergrößerten Ausschnitt einer Teildraufsicht der Vorrichtung gemäß Fig. 5.

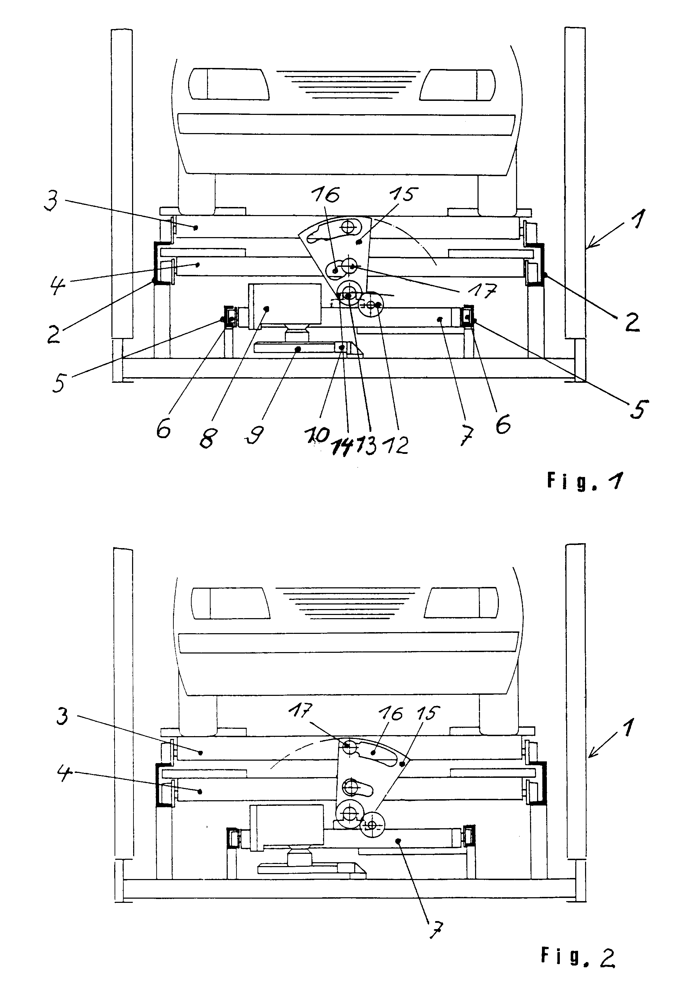

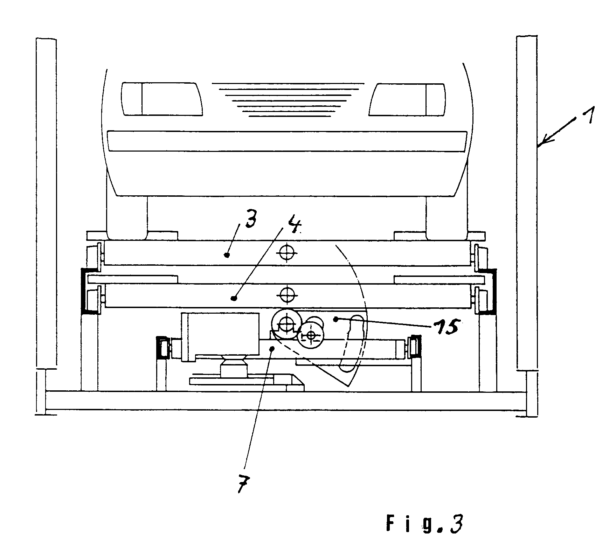

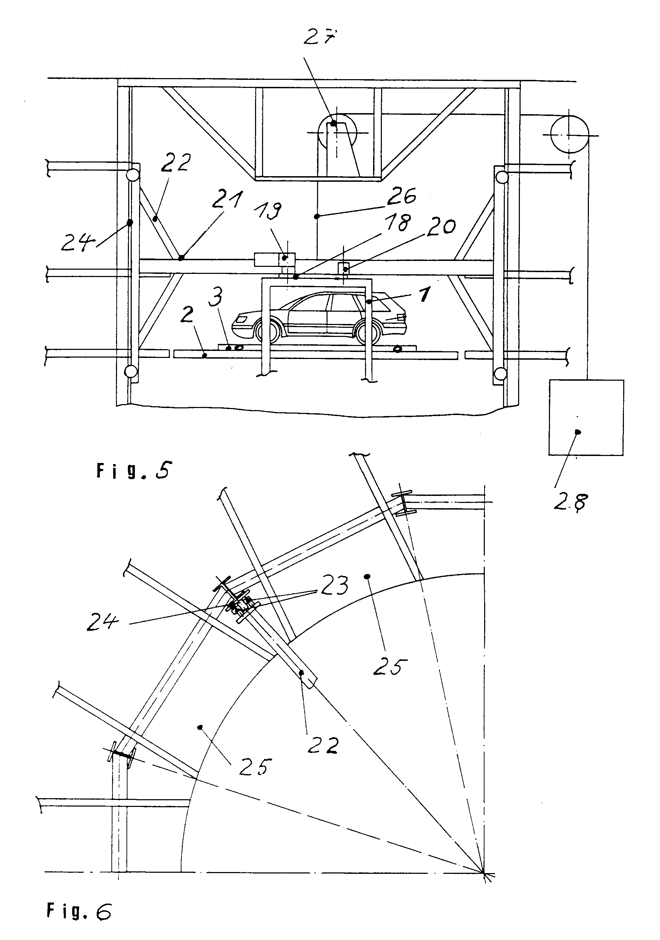

Mit 1 ist ein aus einem Gestell bestehendes Transportmittel bezeichnet, auf dem zwei aufgeständerte, u-förmige Führungsprofile 2 befestigt sind. Die Führungsprofile 2 dienen zur Laufführung von mit Rädern ausgerüsteten Paletten 3 und 4. Mit 3 ist eine mit einem Kraftfahrzeug beladene Palette bezeichnet und mit 4 eine Leerpalette. Auf dem Transportmittel 1 sind ferner zwei aufgeständerte u-förmige Führungsprofile 5 befestigt. Diese dienen zur Laufführung einer mit Rollgliedern 6 ausgerüsteten Verschiebeeinrichtung 7. Die Längsbewegung der Verschiebeeinrichtung 7 wird über einen an der Verschiebeeinrichtung 7 besfestigten Antriebsmotor 8, ein Zahnrad 9 und eine auf dem Transportmittel 1 befestigte Zahnstange 10 durchgeführt. Auf der Verschiebeeinrichtung 7 ist ein Antrieb 11 vorgesehen, der über ein Zahnrad 12, ein drehfest mit einer Welle 13 verbundenes Zahnrad 14, zwei drehfest mit der Welle 13 verbundene Arretierungsglieder 15 verschwenkt. Die Arretierungsglieder sind mit Schlitzöffnungen 16 versehen, in die an den Paletten befestigte Zapfen 17 eingreifen. Durch Schwenken der Arretierungsglieder 15 wird entweder eine Leerpalette 4 (siehe Fig. 1) oder eine beladene Palette 3 (siehe Fig. 2) gegriffen, um dann durch die Verschiebeeinrichtung 7 längsverschoben zu werden. Fig. 3 zeigt die Arretierungsglieder 15 in gänzlich nach unten geschwenkter Lage, wodurch die Verschiebeeinrichtung 7 unterhalb der Palettenanordnung von einem Palettenende zum anderen Palettenende verfahrbar ist. Hierdurch ergeben sich weitergehende Verschiebemöglichkeiten für die Paletten, wofür die Verschiebeeinrichtung 7 auch mit zwei Arretierungsgliedern 15 ausgerüstet ist. Das Transportmittel 1 ist an einem Drehlager 18 angehängt (siehe Fig. 5), das mit einem Antrieb 19 und einem Positionsgeber 20 ausgerüstet ist und seinerseits an einem Senkrechtförderer befestigt ist, der aus einem nicht drehbaren Gestell 21 besteht, das über Arme 22 und Rollen 23 in Profilschienen 24 geführt ist, die sich zwischen jeweils zwei Abstellräumen 25 befinden (siehe Fig. 6). Der Senkrechtförderer hängt an einem Seil 26, das mit einem Förderaggregat 27 und einem Gegengewicht 28 verbunden ist.

## Patentansprüche

1. Vorrichtung zum Verteilen und Lagern von Gütern, die als Transportmittel (1) ausgebildet ist und zwei im Abstand übereinander vorgesehene Führungen (2, 5) für die Horizontalverschiebung von Paletten (3, 4) aufweist und die mit Antriebsmittel (7) versehen ist, mit deren Hilfe eine beladene Palette (3) vom Transportmittel zum Abstellraum und eine unbeladene Palette (4) vom Abstellraum zum Transportmittel oder umgekehrt versetzbar sind,
wobei die Antriebsmittel aus einer auf dem Transportmittel (1) verfahrbaren Verschiebeeinrichtung (7) bestehen, die wahlweise eine mit Fördergut bestückte Palette (3) oder eine Leerpalette (4) zum Verschieben beaufschlagt, dadurch gekennzeichnet, daß die Verschiebeeinrichtung (7) in Längsrichtung des Lagergutes und der Paletten (3, 4) verfährt und sich vor den Stirnseiten der Paletten (3, 4) befindet.

2. Vorrichtung nach Anspruch 1,
dadurch gekennzeichnet, daß
die Verschiebeeinrichtung (7) an dem den Paletten zugewandten Ende mit einem schwenkbaren Arretierungsglied (15) versehen ist.

3. Vorrichtung nach Anspruch 1 oder 2,
dadurch gekennzeichnet, daß
die Verschiebeeinrichtung (7) unterhalb der Palettenanordnung von einem Palettenende zum anderen Palettenende verfahrbar ausgebildet ist.

4. Vorrichtung nach Anspruch 3,
dadurch gekennzeichnet, daß
die Verschiebeeinrichtung (7) an beiden Enden mit einem schwenkbaren Arretierungsglied (15) versehen ist.

5. Vorrichtung nach Anspruch 1,
dadurch gekennzeichnet, daß
das Transportmittel (1) drehbar in einem Senkrechtförderer (21, 22) gelagert ist.

6. Vorrichtung nach Anspruch 5,
dadurch gekennzeichnet, daß
der Senkrechtförderer (21, 22) in Bereichen zwischen jeweils zwei Abstellräumen geführt ist.

## Claims

1. Apparatus for distributing and storing goods, which apparatus is constructed as a transportation means (1) and comprises two guide members (2, 5) spaced one above the other for the horizontal displacement of pallets (3, 4), and which is provided with a drive means (7), by means of which a laden pallet (3) is displaceable from the transportation means to the storage area and an unladen pallet (4) is displaceable from the storage area to the transportation means, or vice versa, whereby the drive means comprise a displacement arrangement (7), which is displaceable on the transportation means (1) and acts selectively upon a pallet (3) which is charged with goods for conveyance or upon an empty pallet (4) for displacement purposes, characterised in that the displacement arrangement (7) moves in the longitudinal direction of the goods for storage and of the pallets (3, 4) and is situated in front of the end faces of the pallets (3, 4).

2. Apparatus according to claim 1, characterised in that the displacement arrangement (7) is provided with a pivotable locking member (15) on the end facing the pallets.

3. Apparatus according to claim 1 or 2, characterised in that the displacement arrangement (7) is designed to be movable underneath the pallet arrangement from one pallet end to the other pellet end.

4. Apparatus according to claim 3, characterised in that the displacement arrangement (7) is provided with a pivotable locking member (15) at both ends.

5. Apparatus according to claim 1, characterised in that the transportation means (1) is rotatably mounted in a vertical conveyor (21, 22).

6. Apparatus according to claim 5, characterised in that the vertical conveyor (21, 22) is guided in regions between two respective storage areas.

## Revendications

1. Dispositif pour répartir et entreposer des produits, qui est conçu comme une installation de manutention (1), qui comporte deux guidages (2, 5) superposés et espacés l'un de l'autre pour le déplacement horizontal de palettes (3, 4) et qui est pourvu de moyens d'entraînement (7) qui permettent de déplacer une palette chargée (3) de l'installation de manutention vers l'espace de stationnement, et une palette vide (4) de cet espace de stationnement vers l'installation de manutention, ou inversement, étant précisé que les moyens d'entraînement se composent d'un dispositif de manoeuvre (7), mobile sur l'installation de manutention (1), qui sollicite sélectivement une palette (3) chargée d'un produit à transporter ou une palette vide (4) pour la déplacer, caractérisé en ce que le dispositif de manoeuvre (7) se déplace dans le sens longitudinal du produit entreposé et des palettes (3, 4) et se trouve devant les côtés frontaux desdites palettes (3, 4).

2. Dispositif selon la revendication 1, caractérisé en ce que le dispositif de manoeuvre (7) est pourvu, à son extrémité tournée vers les palettes, d'un organe d'arrêt pivotant (15).

3. Dispositif selon la revendication 1 ou 2, caractérisé en ce que le dispositif de manoeuvre (7) est conçu pour être mobile, au-dessous du dispositif de palettes, d'une extrémité de palette à l'autre.

4. Dispositif selon la revendication 3, caractérisé en ce que le dispositif de manoeuvre (7) est pourvu à ses deux extrémités d'un organe d'arrêt pivotant (15).

5. Dispositif selon la revendication 1, caractérisé en ce que l'installation de manutention (1) est montée rotative dans un élévateur (21, 22).

6. Dispositif selon la revendication 5, caractérisé en ce que l'élévateur (21, 22) est guidé dans des zones définies entre deux espaces de stationnement.
